# EUROPEAN PATENT APPLICATION

(11) **EP 3 561 731 A1**
(43) Date of publication of application: **30.10.2019**
(21) Application number: 19165460.7
(22) Date of filing: 27.03.2019
(51) Int. Cl.: G06K 19/077, G06K 19/02

(54) **RFID TAG**

(30) Priority: 27.04.2018 JP 2018087242
(71) Applicant: FUJITSU LIMITED, Kanagawa 211-8588 (JP); Fujitsu Frontech Limited, Inagi-shi, Tokyo 206-8555 (JP)
(72) Inventor: Onuki, Hiroshi, Kanagawa, 212-8510 (JP); Baba, Shunji, Kanagawa, 212-8510 (JP); Sugimura, Yoshiyasu, Tokyo, 206-8555 (JP); Niwata, Tsuyoshi, Tokyo, 206-8555 (JP); Miyazawa, Hideo, Tokyo, 206-8555 (JP); Miura, Mimpei, Tokyo, 206-8555 (JP); Saito, Akihiko, Tokyo, 206-8555 (JP)
(74) Representative: Hoffmann Eitle

(57) **Abstract**

An RFID tag (5) includes a first antenna (2) extending in a longitudinal direction of a base, and a reinforcing member (4) extending such that the center thereof projects to opposite sides in a transverse direction of the base. The reinforcing member includes first and second crossover edge portions (4X) and (4Y) crossing with a first antenna at one side and the other side in the base longitudinal direction, respectively, a first inclination edge portion (4A) inclined so as to approach the first antenna from the center side toward one side in the base longitudinal direction and coupled to one side of the first crossover edge portion, a second inclination edge portion (4B) inclined so as to approach the first antenna from the center side toward the other side in the base longitudinal direction and coupled to one side of the second crossover edge portion, a third inclination edge portion (4C) inclined so as to approach the first antenna from the center side toward one side in the base longitudinal direction and coupled to the other side of the first crossover edge portion, and a fourth inclination edge portion (4D) inclined so as to approach the first antenna from the center side toward the other side in the base longitudinal direction and coupled to the other side of the second crossover edge portion.

## Description

### FIELD

The embodiments discussed herein are related to an RFID tag.

### BACKGROUND

For example, an RFID (Radio Frequency Identifier) tag includes an antenna and a semiconductor chip and is used for management of an article by causing the semiconductor chip to operate with an electromagnetic wave received by the antenna and causing ID information stored in the semiconductor chip to be read by external equipment.

### SUMMARY

Incidentally, as use of an RFID tag, management of linen products such as, for example, clothes or sheets is available.

For example, an RFID tag that is used for management of linen products sometimes has a reinforcing member provided thereon in order to suppress the antenna and the semiconductor chip from being broken even if external force acts on the antenna or the semiconductor chip at a washing process.

On the other hand, an RFID tag that is used for management of linens frequently has an elongated shape, and the main deformation mode at a washing process is twist bending.

It has been turned out that, in the case where a reinforcing member, for example, having four corners is provided, when deformation by twist bending occurs with the RFID tag, the four corners of the reinforcing member are deformed and the antenna may be broken by the deformation.

It is to be noted here that, while the problem described above is described as a subject of an RFID tag that is used for management of linen products, this is not restrictive, and there is a similar subject in an RFID tag with which deformation by twist bending occurs.

Accordingly, it is an object in one aspect of the embodiments to contemplate suppression of breakage of an antenna even if deformation by twist bending occurs therewith.

According to one aspect of the embodiments, an RFID tag includes a base, a first antenna provided on the base and extending in a longitudinal direction of the base, a reinforcing member provided over the base and extending such that the center thereof projects to opposite sides in a transverse direction of the base, wherein the reinforcing member includes a first crossover edge portion positioned at one side in the longitudinal direction of the base and crossing with the first antenna as viewed in a top plan, a second crossover edge portion positioned at the other side in the longitudinal direction of the base and crossing with the first antenna as viewed in a top plan, a first inclination edge portion inclined so as to approach from the center side toward one side in the longitudinal direction of the base as viewed in a top plan and coupled to one side of the first crossover edge portion in the transverse direction of the base, a second inclination edge portion inclined so as to approach from the center side toward the other side in the longitudinal direction of the base as viewed in a top plan and coupled to one side of the second crossover edge portion in the transverse direction of the base, a third inclination edge portion inclined so as to approach from the center side toward one side in the longitudinal direction of the base as viewed in a top plan and coupled to the other side of the first crossover edge portion in the transverse direction of the base, and a fourth inclination edge portion inclined so as to approach from the center side toward the other side in the longitudinal direction of the base as viewed in a top plan and coupled to the other side of the second crossover edge portion in the transverse direction of the base.

According to the aspect of the embodiments, an advantageous effect can be achieved that breakage of the antenna can be suppressed even if deformation by twist bending occurs.

### BRIEF DESCRIPTION OF DRAWINGS

FIG. 1 is a schematic top plan view depicting a configuration of an RFID tag according to the present embodiment;
FIG. 2 is a schematic sectional view depicting a configuration of the RFID tag according to the present embodiment;
FIG. 3 is a schematic top plan view depicting a different configuration of a reinforcing member provided in the RFID tag according to the present embodiment;
FIG. 4 is a schematic top plan view depicting a configuration of a first modification to the reinforcing member provided in the RFID tag according to the present embodiment;
FIGS. 5A and 5B are schematic top plan views depicting a configuration of a second modification to the reinforcing member provided in the RFID tag according to the present embodiment;
FIG. 6 is a schematic top plan view depicting a positional relationship between the reinforcing member and an antenna of the second modification provided in the RFID tag according to the present embodiment;
FIG. 7 is a schematic top plan view depicting a configuration of a third modification to the reinforcing member provided in the RFID tag according to the present embodiment;
FIG. 8 is a schematic top plan view depicting a configuration of a fourth modification to the reinforcing member provided in the RFID tag according to the present embodiment;
FIG. 9 is a schematic top plan view depicting a configuration of a fifth modification to the reinforcing member provided in the RFID tag according to the present embodiment;
FIGS. 10A and 10B are schematic top plan views illustrating a method of simulation for confirming an effect by the RFID tag according to the present embodiment, and FIG. 10C is a view depicting a result of the simulation;
FIG. 11 is a schematic top plan view depicting a configuration of a conventional RFID tag; and
FIG. 12 is a schematic top plan view illustrating a subject of the configuration of the conventional RFID tag.

### DESCRIPTION OF EMBODIMENTS

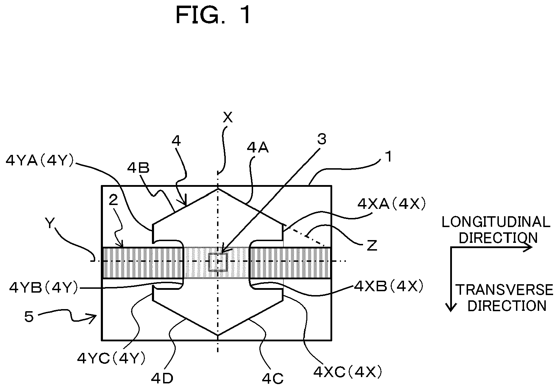

In the following, an RFID tag according to the present embodiment is described with reference to FIGS. 1 to 12.

The RFID tag according to the present embodiment is a linen tag that is used for management of linen products such as, for example, clothes or sheets and has a slender shape, namely, an elongated shape, and flexibility.

It is to be noted that, while the present embodiment is described taking, as an example, a case in which the present embodiment is applied to an RFID tag that is used for management of linen products, this is not restrictive, and the present embodiment can be widely applied to an RFID tag with which deformation by twist bending occurs.

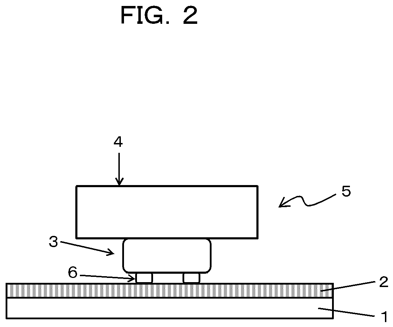

In the present embodiment, as depicted in FIGS. 1 and 2, the RFID tag 5 includes a base 1, an antenna 2, an IC (Integrated Circuit) chip 3 and a reinforcing member 4.

It is to be noted that, while the reinforcing member 4 in FIG. 1 covers the antenna 2 and the IC chip 3, also the antenna 2 and the IC chip 3 provided under the reinforcing member 4 are depicted for the convenience of illustration. Further, in FIG. 2, reference numeral 6 denotes a bump.

Here, the base 1 is a sheet or a film configured from resin such as, for example, PET and having flexibility.

Further, the antenna 2 is configured from a conductive pattern such as, for example, a silver pattern provided on the base 1.

Further, the IC chip 3 is incorporated (mounted) on the base 1. In particular, the IC chip 3 is provided over the base 1 and is electrically coupled to the antenna 2. Further, the IC chip 3 is covered with the reinforcing member 4 hereinafter described.

Further, the reinforcing member 4 is configured from resin such as, for example, PET, and is harder than the base 1 and has high rigidity. Thus, in order to reinforce the periphery of the IC chip 3, the reinforcing member 4 is provided so as to cover the IC chip 3 and the neighborhood of a coupling portion between the IC chip 3 and the antenna 2. For example, it is sufficient if the reinforcing member 4 is provided such that the IC chip 3 is disposed in the proximity of the center of the reinforcing member 4. Further, it is sufficient if the reinforcing member 4 is adhered, for example, by adhesive or the like.

It is to be noted that the reinforcing member 4 may be provided at the upper side of the IC chip 3 or the lower side of the IC chip 3, or may be provided at both of the upper side and the lower side of the IC chip 3. Further, the reinforcing member 4 may be provided in a state in which, for example, a protective sheet is sandwiched therein.

Further, an exterior member may be provided so as to cover the reinforcing member 4. As the exterior member, an elastic sheet such as, for example, a rubber sheet may be used.

It is to be noted that the base 1 is referred to also as substrate. Further, the antenna 2 is referred to also as first antenna or antenna line. Further, the IC chip 3 is referred to also as semiconductor chip. Furthermore, the reinforcing member 4 is referred to also as reinforcing portion or RFID tag reinforcing member.

The RFID tag 5 is used for management of linen products such that the IC chip 3 operates with an electromagnetic wave received by the antenna 2 and ID information stored in the IC chip 3 is read by external equipment.

Since the RFID tag 5 is used for management of linen products, it includes the reinforcing member 4 in order to suppress breakage of the antenna 2 and the semiconductor chip 3 even if external force acts on the components at a washing process.

Especially, in the present embodiment, the RFID tag 5 includes the antenna 2 provided on the base 1 and extending in the longitudinal direction of the base 1, and the reinforcing member 4 provided over the base 1 and extending such that the center thereof projects to opposite sides in the transverse direction of the base 1.

It is to be noted here that, since the antenna 2 extends along the longitudinal direction of the base 1, the longitudinal direction of the base 1 and the longitudinal direction of the antenna 2 coincide with each other and the transverse direction of the base 1 and the transverse direction of the antenna 2 coincide with each other.

Further, the reinforcing member 4 includes a first crossover edge portion 4X, a second crossover edge portion 4Y, a first inclination edge portion 4A, a second inclination edge portion 4B, a third inclination edge portion 4C and a fourth inclination edge portion 4D. It is to be noted that the inclination edge portions 4A to 4D are individually referred to also as inclination portion, hypotenuse or hypotenuse portion. Further, the crossover edge portions 4X and 4Y are individually referred to also as crossover portion.

Here, the first crossover edge portion 4X is positioned at one side (here, the right side in FIG. 1) in the longitudinal direction of the base 1 and crosses with the antenna 2 as viewed in a top plan.

The second crossover edge portion 4Y is positioned at the other side (here, the left side in FIG. 1) in the longitudinal direction of the base 1 and crosses with the antenna 2 as viewed in a top plan.

The first inclination edge portion 4A is inclined from the center side (namely, the center side in the base longitudinal direction of the reinforcing member 4; refer to a line indicated by reference character X) toward the one side in the longitudinal direction of the base 1 (here, the right side in FIG. 1) so as to approach the antenna 2 as viewed in a top plan, and is coupled to one side of the first crossover edge portion 4X (here, to the upper side in FIG. 1) in the transverse direction of the base 1.

The second inclination edge portion 4B is inclined from the center side (namely, the center side in the base longitudinal direction of the reinforcing member 4; refer to the line indicated by reference character X) toward the other side in the longitudinal direction of the base 1 (here, the left side in FIG. 1) so as to approach the antenna 2 as viewed in a top plan, and is coupled to the one side of the second crossover edge portion 4Y (here, the upper side in FIG. 1) in the transverse direction of the base 1.

The third inclination edge portion 4C is inclined from the center side (namely, the center side in the base longitudinal direction of the reinforcing member 4; refer to the line indicated by reference character X) toward the one side in the longitudinal direction of the base 1 (here, the right side in FIG. 1) so as to approach the antenna 2 as viewed in a top plan, and is coupled to the other side (here, the lower side in FIG. 1) of the first crossover edge portion 4X in the transverse direction of the base 1.

The fourth inclination edge portion 4D is inclined from the center side (namely, the center side in the base longitudinal direction of the reinforcing member 4; refer to the line indicated by reference character X) toward the other side in the longitudinal direction of the base 1 (here, the left side in FIG. 1) so as to approach the antenna 2 as viewed in a top plan, and is coupled to the other side of the second crossover edge portion 4Y (here, the lower side in FIG. 1) in the transverse direction of the base 1.

In this manner, the first crossover edge portion 4X and the second crossover edge portion 4Y of the reinforcing member 4 cross with the antenna 2 as viewed in a top plan, and the first inclination edge portion 4A, second inclination edge portion 4B, third inclination edge portion 4C and fourth inclination edge portion 4D do not cross with the antenna 2 as viewed in a top plan.

In the present embodiment, the first inclination edge portion 4A and the second inclination edge portion 4B are coupled to each other, and the third inclination edge portion 4C and the fourth inclination edge portion 4D are coupled to each other.

Here, the first inclination edge portion 4A and the second inclination edge portion 4B are coupled at a central position of the reinforcing member 4 (refer to the line denoted by reference character X) in the base longitudinal direction as viewed from a top plan, and the third inclination edge portion 4C and the fourth inclination edge portion 4D are coupled at a central position of the reinforcing member 4 (refer to the line denoted by reference character X) in the base longitudinal direction as viewed in a top plan.

It is to be noted that this is not restrictive, and, for example, a portion at which the first inclination edge portion 4A and the second inclination edge portion 4B are coupled to each other or another portion at which the third inclination edge portion 4C and the fourth inclination edge portion 4D are coupled to each other may be positioned at a position displaced from the central position of the reinforcing member 4 within a central region of the reinforcing member 4 in the base longitudinal direction as viewed in a top plan. Also in this case, the reinforcing member 4 extends such that the center thereof projects to opposite sides in the transverse direction of the base 1.

Further, for example, the reinforcing member 4 may be configured so as to include a first parallel edge portion that is positioned at the one side in the transverse direction of the base and extend in parallel to the longitudinal direction of the base as viewed in a top plan and a second parallel edge portion that is positioned at the other side in the transverse direction of the base and extends in parallel to the longitudinal direction of the base as viewed in a top plan, and the first inclination edge portion 4A and the second inclination edge portion 4B may be coupled to each other through the first parallel edge portion and the third inclination edge portion 4C and the fourth inclination edge portion 4D may be coupled to each other through the second parallel edge portion.

Further, in the present embodiment, each of the first crossover edge portion 4X and the second crossover edge portion 4Y is an orthogonal edge portion orthogonal to the antenna 2 as viewed in a top plan. It is to be noted that the orthogonal edge portion is referred to also as orthogonal portion.

Further, in the present embodiment, the first crossover edge portion 4X is positioned at the one side (here, the right side in FIG. 1) in the longitudinal direction of the base 1 and the second crossover edge portion 4Y is positioned at the other side (here, the left side in FIG. 1) in the longitudinal direction of the base 1. Further, as described above, the first crossover edge portion 4X and the second crossover edge portion 4Y cross with the antenna 2 as viewed in a top plan and cross with the antenna 2.

Therefore, the portion of the reinforcing member 4 sandwiched by the first crossover edge portion 4X and the second crossover edge portion 4Y overlap with the antenna 2 as viewed in a top plan and crosses with the antenna 2.

It is to be noted that, since the portion of the reinforcing member 4 sandwiched by the first crossover edge portion 4X and the second crossover edge portion 4Y is positioned at the center in the transverse direction of the base 1, the portion is referred to also as the central portion or base transverse direction central portion. Further, portions continue to the central portion at opposite sides in the transverse direction of the base 1 across the central portion are referred to also as first extending portion and second extending portion. In this case, the first extending portion includes the first inclination edge portion 4A and the second inclination edge portion 4B, and the second extending portion includes the third inclination edge portion 4C and the fourth inclination edge portion 4D.

In this manner, the reinforcing member 4 having the hypotenuses 4A to 4D each having an angle is used for the antenna 2 that is a protection target. In particular, the reinforcing member 4 has the four hypotenuses 4A to 4D each having an angle with respect to a first reference line (line denoted by reference character Y in FIG. 1) that passes the center of the reinforcing member 4 and be parallel to the antenna 2 of a protection target and a second reference line (line denoted by reference character X in FIG. 1) that passes the center of the reinforcing member 4 and be perpendicular to the antenna 2 of a protection target.

It is to be noted that the first reference line (line denoted by reference character Y in FIG. 1) is a center line in the base longitudinal direction of the reinforcing member 4 (antenna longitudinal direction) and the second reference line (line denoted by reference character X in FIG. 1) is a center line in the base transverse direction of the reinforcing member 4 (antenna transverse direction) .

Further, the directions (angles) of the four hypotenuses 4A to 4D are set such that the size in the base longitudinal direction of the reinforcing member 4 decreases away from the center of the reinforcing member 4.

Further, the antenna 2 of the protection target is disposed so as to pass the neighborhood of the center of the reinforcing member 4 and cross with the reinforcing member 4. Further, the shapes of the four hypotenuses 4A to 4D of the reinforcing member 4 are determined so as not to cover the antenna 2 of the protection target as viewed in a top plan.

Consequently, since the RFID tag 5 deforms along the four hypotenuses 4A to 4D of the reinforcing member 4 upon twist bending, damage to the antenna 2 around the reinforcing member 4 can be suppressed.

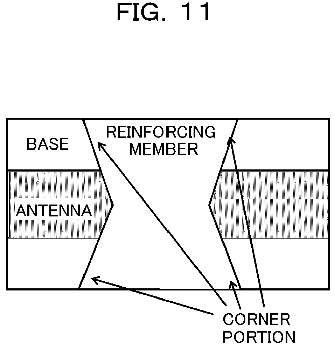

Further, the probability that permanent deformation (plastic deformation) of the reinforcing member 4 may occur can be decreased by cutting corners (for example, refer to FIG. 11) of the reinforcing member 4 that is liable to be deformed upon twist bending, and damage to the antenna 2 around the reinforcing member 4 can be suppressed and breakage of the antenna 2 and the semiconductor chip 3 can be suppressed.

Incidentally, the reason why such a configuration as described above is adopted is described below.

For an RFID tag used for management of linen products, it is demanded to have a performance that an antenna and a semiconductor chip are not broken also under pressure that acts on the RFID tag within a process in which the linen products are washed.

On such an RFID tag to be used for management of linen products as described above, a reinforcing member is sometimes provided such that an antenna or a semiconductor chip may not be broken even if mechanical external force acts thereupon.

For example, as a reinforcing member that covers an antenna and a semiconductor chip from above, a reinforcing member that has a concave and a convex at a side portion thereof and is shaped so as to suppress breakage of the antenna by crossing of the antenna and the concave is available. Also a reinforcing member is available which has a notch smaller than such concave and convex formed at the side portion in addition to the concave and convex such that a bending line formed upon bending of the reinforcing member is displaced from the semiconductor chip.

On the other hand, an RFID tag used for management of linen produces frequently has an elongated shape, and the main deformation mode in a washing process (for example, pressure dehydration step) is twist bending. In short, the RFID tag used for management of linen products is an RFID tag with which deformation by twist bending occurs.

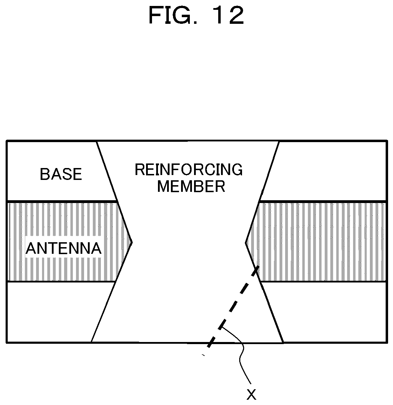

Thus, if a reinforcing member is configured so as to have four corner portions, for example, as depicted in FIG. 11 as in a commonly used reinforcing member, then when deformation caused by twist bending occurs with the RFID tag, the four corner portions of the reinforcing member are deformed (permanently deformed), for example, along a fold line indicated by a broken line X in FIG. 12, and, as a result, the antenna is damaged and broken in the proximity of the reinforcing member. It is to be noted that, while a fold line is depicted at only one corner portion in FIG. 12, this similarly applies also to the three remaining corner portions.

For example, when deformation by twist bending occurs with the RFID tag, the four corner portions of the reinforcing member used for protection of the semiconductor chip are permanently deformed (plastically deformed), which deforms the overall RFID tag, and, in a next washing process, the way of action of force on the RFID tag sometimes varies, resulting in breakage of the antenna or the semiconductor chip.

Therefore, in order to implement suppression of breakage of the antenna even if deformation by twist bending occurs, such a configuration as described above (refer to FIG. 1) is adopted.

In particular, by adopting such a configuration as described above (refer to FIG. 1), when deformation by twist bending occurs with the RFID tag 5, the deformation by the twist bending can be introduced along the inclination edge portions 4A to 4D of the reinforcing member 4. In short, since the reinforcing member 4 is harder than portions of the RFID tag 5 other than the reinforcing member 4, deformation such as bending easily occurs along the outer shape of the reinforcing member 4. Therefore, by providing the inclination edge portions 4A and 4D on the reinforcing member 4, when deformation by twist bending occurs with the RFID tag 5, the deformation by the twist bending can be introduced such that deformation occurs along the inclination edge portions 4A to 4D.

Further, since the central portion of the reinforcing member 4 crosses with the antenna 2 that is a protection target and the inclination edge portions 4A to 4D of the reinforcing member 4 do not cross with the antenna 2 of the protection target, breakage of the antenna 2 upon twist bending can be suppressed.

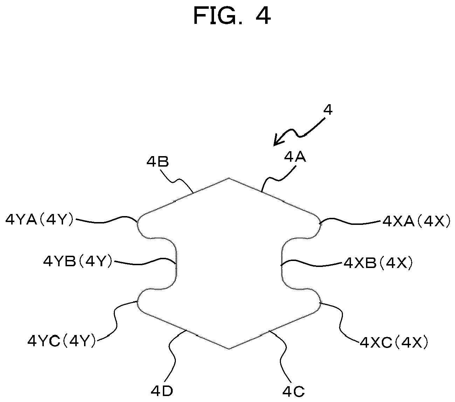

It is to be noted that, for example, as disclosed in Japanese Laid-open Patent Publication No. 2008-40950 (for example, refer to FIG. 4), if the inclination edge portions of the reinforcing member are configured so as to cross with the antenna, then there is the possibility that, upon twist bending, the antenna may contact with the inclination edge portions of the hard reinforcing member and may be broken at the contacting portion thereof .

Further, since adoption of such a configuration as described above (refer to FIG. 1) makes it possible to introduce deformation by twist bending along the inclination edge portions 4A to 4D of the reinforcing member 4, an estimated fold line (refer to, for example, a line indicated by reference character Z in FIG. 1) extending along each of the inclination edge portions 4A to 4D of the reinforcing member 4 obliquely crosses with the antenna 2 that is a protection target. Consequently, in comparison with an alternative case in which a fold line perpendicularly crosses with the antenna 2, the length of the crossing portion increases, and therefore, damage to the antenna 2 upon twist bending decreases and breakage of the antenna 2 can be suppressed.

Incidentally, in the present embodiment, as depicted in FIG. 1, the first crossover edge portion 4X has a first convex portion 4XA, a first concave portion 4XB and a second convex portion 4XC, and the second crossover edge portion 4Y has a third convex portion 4YA, a second concave portion 4YB and a fourth convex portion 4YC.

Further, the first concave portion 4XB of the first crossover edge portion 4X and the second concave portion 4YB of the second crossover edge portion 4Y cross with the antenna 2 as viewed in a top plan view, and the first convex portion 4XA and the second convex portion 4XC of the first crossover edge portion 4X and the third convex portion 4YA and the fourth convex portion 4YC of the second crossover edge portion 4Y do not cross with the antenna 2 as viewed in a top plan view.

In particular, the antenna 2 is disposed so as to pass the concave portions (first concave portion 4XB and second concave portion 4YB) provided on the side portions of the reinforcing member 4 as viewed in a top plan view (side faces on opposite sides in the base longitudinal direction) but do not overlap with the convex portions (first convex portion 4XA, second convex portion 4XC, third convex portion 4YA and fourth convex portion 4YC) provided on the side portions of the reinforcing member 4 as viewed in a top plan view.

In this case, the reinforcing member 4 can be considered such that it extends in a shape of a double-sided arrow mark (↔) in the transverse direction of the base 1 and is constricted from opposite sides in the neighborhood of the center of the reinforcing member 4 as viewed from the transverse direction of the base 1 and besides the antenna 2 extends under the constricted portions and each of the arrow-shaped portions of the reinforcing member 4 as viewed in a top plan view is inclined from the vertex thereof toward the antenna 2.

By configuring the reinforcing member 4 in this manner, it is possible to reduce the stress (for example, bending stress) to be applied to the antenna 2 or the IC chip 3 and suppress breakage (disconnection) of the antenna 2.

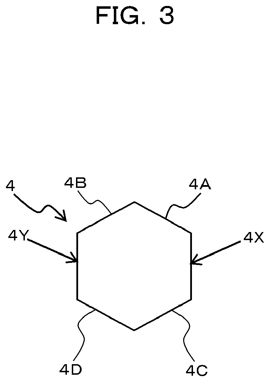

It is to be noted that, while, in the present embodiment, the first crossover edge portion 4X and the second crossover edge portion 4Y are formed as edge portions having concave and convex shapes including the first concave portion 4XB and the second concave portion 4YB, this is not restrictive, and the first crossover edge portion 4X and the second crossover edge portion 4Y may be formed as linear edge portions that do not include the first concave portion 4XB and the second concave portion 4YB, respectively. In short, while, in the present embodiment the reinforcing member 4 has the concave portions 4XB and 4YB on the side portions thereof (side faces on opposite sides in the base longitudinal direction), this is not restrictive, and the reinforcing member 4 may otherwise have linear edge portions having no convex portion, for example, as depicted in FIG. 3.

Incidentally, in the configuration of the embodiment described above (refer to FIG. 1), the first convex portion 4XA and the second convex portion 4XC of the first crossover edge portion 4X and the third convex portion 4YA and the forth convex portion 4YC of the second crossover edge portion 4Y may have a curved shape as depicted in FIG. 4. The reinforcing member 4 in this case is referred to as first modification.

In particular, while, in the embodiment described above, one of the corner portions of the first convex portion 4XA of the first crossover edge portion 4X is coupled to the first inclination edge portion 4A and the other corner portion is coupled to the first concave portion 4XB, the corner portions may have a curved shape. Further, although one of the corner portions of the second convex portion 4XC of the first crossover edge portion 4X is coupled to the third inclination edge portion 4C and the other corner portion is coupled to the first concave portion 4XB, the corner portions may have a curved shape. Further, although one of the corner portions of the third convex portion 4YA of the second crossover edge portion 4Y is coupled to the second inclination edge portion 4B and the other corner portion is coupled to the second concave portion 4YB, the corner portions may have a curved shape. Further, although one of the corner portions of the fourth convex portion 4YC of the second crossover edge portion 4Y is coupled to the fourth inclination edge portion 4D and the other corner portion is coupled to the second concave portion 4YB, the corner portions may have a curved shape.

For example, it is sufficient if the corner portions are curved by R chamfering them.

In this manner, the portion at which the first crossover edge portion 4X and the first inclination edge portion 4A are coupled to each other, the portion at which the second crossover edge portion 4Y and the second inclination edge portion 4B are coupled to each other, the portion at which the first crossover edge portion 4X and the third inclination edge portion 4C are coupled to each other and the portion at which the second crossover edge portion 4Y and the fourth inclination edge portion 4D are coupled to each other may have a curved shape. In short, an end point of the first inclination edge portion 4A at the first crossover edge portion 4X side, an end point of the second inclination edge portion 4B at the second crossover edge portion 4Y side, an end point of the third inclination edge portion 4C at the first crossover edge portion 4X side and an end point of the fourth inclination edge portion 4D at the second crossover edge portion 4Y side may have a curved shape.

Further, the portion at which the first convex portion 4XA and the first concave portion 4XB of the first crossover edge portion 4X are coupled to each other, the portion at which the first concave portion 4XB and the second convex portion 4XC of the first crossover edge portion 4X are coupled to each other, the portion at which the third convex portion 4YA and the second concave portion 4YB of the second crossover edge portion 4Y are coupled to each other and the portion at which the second concave portion 4YB and the fourth convex portion 4YC of the second crossover edge portion 4Y may have a curved shape.

This configuration can suppress concentration of stress.

It is to be noted that, while the first modification is described taking a case in which it is applied to the configuration of the embodiment described hereinabove (refer to FIG. 1) as an example, this is not restrictive, and the configuration of the first modification may otherwise be applied to a configuration in which the reinforcing member 4 does not have the concave portions 4XB and 4YB (refer to FIG. 3).

In this case, it is sufficient if the portion at which the first crossover edge portion 4X and the first inclination edge portion 4A are coupled to each other, the portion at which the second crossover edge portion 4Y and the second inclination edge portion 4B are coupled to each other, the portion at which the first crossover edge portion 4X and the third inclination edge portion 4C are coupled to each other and the portion at which the second crossover edge portion 4Y and the fourth inclination edge portion 4D are coupled to each other have a curved shape.

Furthermore, the configuration of the first modification described above (refer to FIG. 4) may be modified such that the first inclination edge portion 4A and the second inclination edge portion 4B are coupled to each other and the third inclination edge portion 4C and the fourth inclination edge portion 4D are coupled to each other such that the portion at which the first inclination edge portion 4A and the second inclination edge portion 4B are coupled to each other has a curved shape and the portion at which the third inclination edge portion 4C and the fourth inclination edge portion 4D are coupled to each other has a curved shape. This is referred to as second modification.

In short, the crossing point of the first inclination edge portion 4A and the second inclination edge portion 4B coupled to each other may have a curved shape and the crossing point of the third inclination edge portion 4C and the fourth inclination edge portion 4D coupled to each other may have a curved shape.

For example, it is sufficient if the crossing points are curved by R chamfering them.

The configuration described above can suppress concentration of stress.

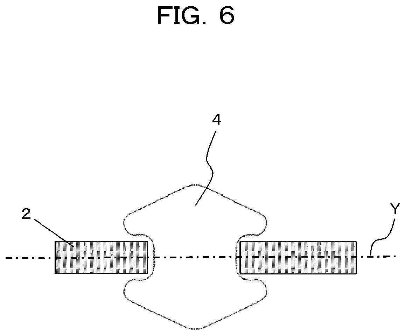

In this case, the positional relationship between the reinforcing member 4 and the antenna 2 of a protection target becomes such as depicted in FIG. 6.

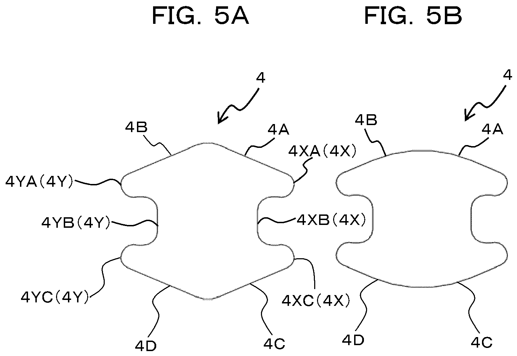

It is to be noted that, although the description here is given taking a case in which the portions having a curved shape (crossingpoint) have a small radius, namely, have a small radius of curvature, as depicted in FIG. 5A as an example, the radius, namely, the radius of curvature, of the curved portion may be made greater, for example, as depicted in FIG. 5B.

Further, it is sufficient if the first inclination edge portion 4A, second inclination edge portion 4B, third inclination edge portion 4C and fourth inclination edge portion 4D are edges portions that are at least inclined, and the edge portions may have a linear shape [for example, refer to FIG. 5A] or may have a curved shape [for example, refer to FIG. 5B].

In short, the first inclination edge portion 4A and the second inclination edge portion 4B may individually have a linear shape and be curved at a cross point therebetween and the third inclination edge portion 4C and the fourth inclination edge portion 4D may individually have a linear shape and be curved at a cross point therebetween [for example, refer to FIG. 5A]. Alternatively, the first inclination edge portion 4A and the second inclination edge portion 4B as well as a cross point therebetween may entirely have a curved shape and the third inclination edge portion 4C and the fourth inclination edge portion 4D as well as a cross point therebetween may entirely have a curved shape [for example, refer to FIG. 5B].

Further, although the description here is given taking a case in which the first inclination edge portion 4A and the second inclination edge portion 4B are coupled to each other and the third inclination edge portion 4C and the fourth inclination edge portion 4D are coupled to each other as an example, this is not restrictive, and, for example, in the case where the first inclination edge portion 4A and the second inclination edge portion 4B are coupled to each other through a first parallel edge portion parallel to the base longitudinal direction and the third inclination edge portion 4C and the fourth inclination edge portion 4D are coupled to each other through a second parallel edge portion parallel to the base longitudinal direction, it is sufficient if a portion at which the first inclination edge portion 4A and the first parallel edge portion are coupled to each other, a portion at which the second inclination edge portion 4B and the first parallel edge portion are coupled to each other, a portion at which the third inclination edge portion 4C and the second parallel edge portion are coupled to each other and a portion at which the fourth inclination edge portion 4D and the second parallel edge portion are coupled to each other have a curved shape.

Further, although the second modification is described taking a case in which it is applied to the configuration of the first modification described hereinabove (refer to FIG. 4) as an example, this is not restrictive, and the configuration of the present second modification may be applied to the configuration of the embodiment described hereinabove (refer to FIG. 1) or a configuration in which the concave portions 4XB and 4YB are not provided on the side portions of the reinforcing member 4 (refer to FIG. 3).

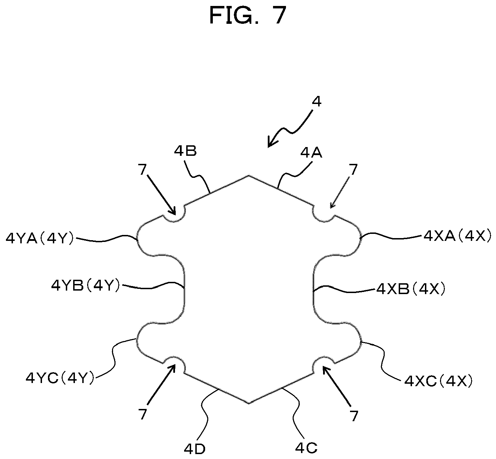

Further, in the configuration of the first modification described hereinabove (refer to FIG. 4), a notch (cut) 7 may be provided on each of the first inclination edge portion 4A, second inclination edge portion 4B, third inclination edge portion 4C and fourth inclination edge portion 4D as depicted in FIG. 7. This is referred to as third modification.

It is to be noted that the number of such notches 7 provided on each inclination edge portions 4A to 4D may be one or a plural number.

In this manner, each of the first inclination edge portion 4A, second inclination edge portion 4B, third inclination edge portion 4C and fourth inclination edge portion 4D may have at least one notch 7.

It is to be noted that, while the present third modification is described taking a case in which it is applied to the configuration of the first modification described hereinabove (refer to FIG. 4) as an example, this is not restrictive, and the configuration of the present third modification may be applied to the configuration of the embodiment described hereinabove (refer to FIG. 1), the configuration in which the concave portions 4XB and 4YB are not provided on the side portions of the reinforcing member 4 (refer to FIG. 3) and the configuration of the second modification described above [refer to FIGS. 5A and 5B].

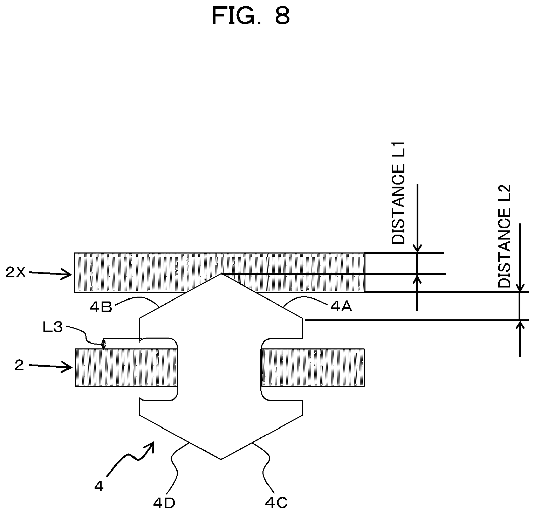

Further, in the case where the configuration of the embodiment described above (refer to FIG. 1) further includes a different antenna 2X as depicted in FIG. 8 and also it is intended to protect also the different antenna 2X, it is sufficient if the first inclination edge portion 4A and the second inclination edge portion 4B are disposed so as to partially overlap with the different antenna 2X as viewed in a top plan view. It is to be noted that the different antenna 2X is referred to also as second antenna. The configuration described is referred to as fourth modification.

In short, it is sufficient if the configuration of the embodiment described above (refer to FIG. 1) is modified such that it further includes a second antenna 2X provided on the base 1 and extending in the longitudinal direction of the base 1 such that the first inclination edge portion 4A and the second inclination edge portion 4B of the reinforcing member 4 partially overlap with the second antenna 2X as viewed in a top plan view.

In this case, the second antenna 2X has a region in which the reinforcing member 4 overlaps and another region in which the reinforcing member 4 does not overlap with the antenna 2X in the base transverse direction.

By configuring the reinforcing member 4 (first inclination edge portion 4A and second inclination edge portion 4B) such that it does not cross with the second antenna 2X entirely in the widthwise direction, breakage (disconnection) of the second antenna 2X can be suppressed.

In the case where there is a second antenna 2X to be protected in this manner, it is sufficient if the shape of the reinforcing member 4, the arrangement (position) of the second antenna 2X and so forth are determined such that both of distances L1 and L2 are greater than 0 as depicted in FIG. 8. In this case, the shape of the reinforcing member 4, the disposition (position) of the first antenna 2 and so forth are determined such that a distance L3 becomes greater than 0.

It is to be noted that, although the description here is given taking a case in which the first inclination edge portion 4A and the second inclination edge portion 4B of the reinforcing member 4 partially overlap with the different antenna (second antenna) 2X as viewed in a top plan view as an example, this is not restrictive, and, for example, it may be configured such that the third inclination edge portion 4C and the fourth inclination edge portion 4D of the reinforcing member partially overlap with a different antenna (second antenna) as viewed in a top plan view. In short, it is sufficient if it is configured such that the first inclination edge portion 4A and the second inclination edge portion 4B or the third inclination edge portion 4C and the fourth inclination edge portion 4D partially overlap the second antenna 2X as viewed in a top plan view.

Alternatively, the configuration of the third modification described hereinabove (refer to FIG. 7) may be applied to the configuration of the fourth modification described hereinabove (refer to FIG. 8). This is referred to as fifth modification.

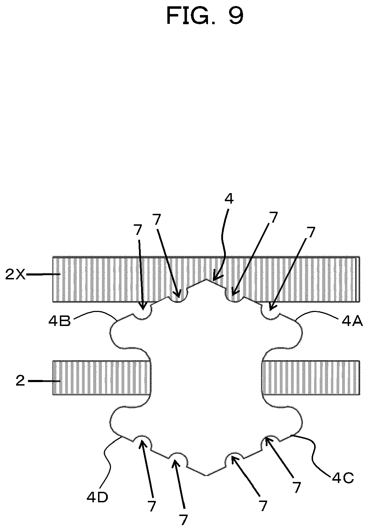

It is to be noted that FIG. 9 depicts a case in which a plurality of notches 7 are provided on each of the inclination edge portions 4A to 4D as an example.

In this manner, the reinforcing member 4 may be configured such that the first inclination edge portion 4A and the second inclination edge portion 4B thereof partially overlap with a different antenna (second antenna) 2X as viewed in a top plan view and notches (cuts) 7 are provided at portions thereof overlapping with the second antenna 2X. In other words, the notches 7 provided on the reinforcing member 4 and the second antenna 2X may overlap with each other as viewed in a top plan view.

The configuration described above makes it possible to moderate, in the case where the first crossover edge portion 4X and the second crossover edge portion 4Y of the reinforcing member 4 overlap with the second antenna 2X as viewed in a top plan view, the stress to be applied to the second antenna 2X.

It is to be noted that, where a plurality of notches 7 are provided on each of the inclination edge portions 4A to 4D, since one of the notches comes to overlap with the second antenna 2X, it is possible to cope with an error in the shape of the reinforcing member 4 or with positional displacement between the reinforcing member 4 and the second antenna 2X.

In this case, it is sufficient if the second antenna 2X and the notches 7 of the reinforcing member 4 have such a positional relationship that at least one notch 7 overlaps with the second antenna 2X as viewed in a top plan view.

It is to be noted that, while the description here is given taking a case in which the first inclination edge portion 4A and the second inclination edge portion 4B of the reinforcing member 4 partially overlap with the different antenna (second antenna) 2X as viewed in a top plan view as an example, this is not restrictive. For example, the third inclination edge portion 4C and the fourth inclination edge portion 4D of the reinforcing member 4 may partially overlap with the different antenna 2X (second antenna) as viewed in a top plan view. In this case, it is sufficient if the third inclination edge portion 4C and the fourth inclination edge portion 4D have notches provided at portions thereof that overlap with the second antenna 2X.

In this manner, it is sufficient if the first inclination edge portion 4A and the second inclination edge portion 4B or the third inclination edge portion 4C and the fourth inclination edge portion 4D of the reinforcing member 4 partially overlap with the second antenna 2X as viewed in a top plan view. In the case where the first inclination edge portion 4A and the second inclination edge portion 4B of the reinforcing member 4 partially overlap with the second antenna 2X, it is sufficient if the first inclination edge portion 4A and the second inclination edge portion 4B have notches 7 at portions thereof that overlap with the second antenna 2X, and in the case where the third inclination edge portion 4C and the fourth inclination edge portion 4D of the reinforcing member 4 partially overlap with the second antenna 2X, it is sufficient if the third inclination edge portion 4C and the fourth inclination edge portion 4D has second notches 7 at portions thereof that overlap with the second antenna 2X.

Accordingly, the RFID tags according to the present embodiment and the modifications have an advantageous effect that, even if deformation by twist bending occurs therewith, breakage of the antenna 2 (2X) can be suppressed.

Especially because twist bending is introduced from inclined portions of the reinforcing member 4, damage to the antenna 2 can reduced and breakage of the antenna 2 can be suppressed.

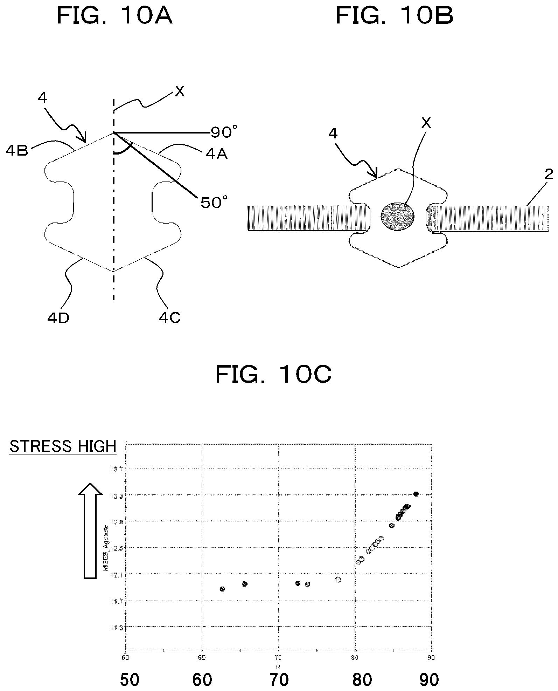

Here, in order to confirm the advantageous effect described, simulation was performed by applying a load to the center of the reinforcing member 4 [portion indicated by reference character X in FIG. 10B] as depicted in FIG. 10B while the angle (hypotenuse angle) R of each of the inclination edge portions 4A to 4D of a reinforcing member, namely, the angle defined by each of the inclination edge portions 4A to 4D and a line extending in the transverse direction of the base 1 [indicated by reference character X in FIG. 10A] is successively changed as depicted in FIG. 10A. A result of the simulation indicates that such stresses as depicted in FIG. 10C were applied to the antenna 2 at the individual angles.

As depicted in FIG. 10C, it was confirmed that, as the angle (hypotenuse angle) R of each of the inclination edge portions 4A to 4D of the reinforcing member 4, namely, as the angle defined by each of the inclination edge portions 4A to 4D and a line extending in the transverse direction of the base 1 [indicated by reference character X in FIG. 10A] is successively decreased from 90 degrees, the stress applied to the antenna 2 gradually decreases.

In short, by the provision of the inclination edge portions 4A to 4D on the reinforcing member 4 as in the embodiment and modifications described above, it is possible to introduce deformation such that the deformation occurs along the inclination edge portions 4A to 4D, and as a result, it was confirmed that this decreases the stress applied to the antenna 2.

Since the stress applied to the antenna 2 decreases by introducing deformation so as to occur along the inclination edge portions 4A to 4D in this manner, it was confirmed that breakage of the antenna 2 can be suppressed.

Further, it was found that, if the angle (hypotenuse angle) R of the inclination edge portions 4A to 4D of the reinforcing member 4, namely, the angle defined between the inclination edge portions 4A to 4D and the line extending in the lateral direction of the base 1 [indicated by reference character X in FIG. 10A], becomes equal to or smaller than approximately 75 degrees, then the stress applied to the antenna 2 decreases sufficiently.

Therefore, in the configuration of the embodiment and the modifications described above, it is preferable to set the first inclination edge portion 4A, second inclination edge portion 4B, third inclination edge portion 4C and fourth inclination edge portion 4D of the reinforcing member 4 so as to define an angle of 75 degrees or less with respect to the line extending along the transverse direction of the base 1 [indicated by reference character X in FIG. 10A].

## Claims

1. An RFID tag, comprising:
a base (1);
a first antenna (2) provided on the base and extending in a longitudinal direction of the base;
a reinforcing member (4) provided over the base and extending such that the center thereof projects to opposite sides in a transverse direction of the base; wherein
the reinforcing member includes:
a first crossover edge portion (4X) positioned at one side in the longitudinal direction of the base and crossing with the first antenna as viewed in a top plan;
a second crossover edge portion (4Y) positioned at the other side in the longitudinal direction of the base and crossing with the first antenna as viewed in a top plan;
a first inclination edge portion (4A) inclined so as to approach from the center side toward one side in the longitudinal direction of the base as viewed in a top plan and coupled to one side of the first crossover edge portion in the transverse direction of the base;
a second inclination edge portion (4B) inclined so as to approach from the center side toward the other side in the longitudinal direction of the base as viewed in a top plan and coupled to one side of the second crossover edge portion in the transverse direction of the base;
a third inclination edge portion (4C) inclined so as to approach from the center side toward one side in the longitudinal direction of the base as viewed in a top plan and coupled to the other side of the first crossover edge portion in the transverse direction of the base; and
a fourth inclination edge portion (4D) inclined so as to approach from the center side toward the other side in the longitudinal direction of the base as viewed in a top plan and coupled to the other side of the second crossover edge portion in the transverse direction of the base.

2. The RFID tag according to claim 1, wherein the first inclination edge portion (4A), second inclination edge portion (4B), third inclination edge portion (4C) and fourth inclination edge portion (4D) do not cross with the first antenna (2) as viewed in a top plan.

3. The RFID tag according to claim 1 or 2, wherein the first crossover edge portion (4X) includes a first convex portion (4XA), a first concave portion (4XB) and a second convex portion (4XC);
the second crossover edge portion (4Y) includes a third convex portion (4YA), a second concave portion (4YB) and a fourth convex portion (4YC); and
the first concave portion of the first crossover edge portion and the second concave portion of the second crossover edge portion cross with the first antenna (2) as viewed in a top plan.

4. The RFID tag according to claim 3, wherein the first convex portion (4XA) and the second convex portion (4XC) of the first crossover edge portion (4X) and the third convex portion (4YA) and the fourth convex portion (4YC) of the second crossover edge portion (4Y) do not cross with the first antenna (2) as viewed in a top plan.

5. The RFID tag according to claim 1 or 2, wherein a portion at which the first crossover edge portion (4X) and the first inclination edge portion (4A) are coupled to each other, another portion at which the second crossover edge portion (4Y) and the second inclination edge portion (4B) are coupled to each other, a further portion at which the first crossover edge portion (4X) and the third inclination edge portion (4C) are coupled to each other and a still further portion at which the second crossover edge portion (4Y) and the fourth inclination edge portion (4D) are coupled to each other individually have a curved shape.

6. The RFID tag according to claim 3 or 4, wherein the first convex portion (4XA) and the second convex portion (4XC) of the first crossover edge portion (4X) and the third convex portion (4YA) and the fourth convex portion (4YC) of the second crossover edge portion (4Y) individually have a curved shape.

7. The RFID tag according to any one of claims 1 to 6, wherein the first inclination edge portion (4A) and the second inclination edge position (4B) are coupled to each other at a central position of the reinforcing member (4) in the longitudinal direction of the base (1) as viewed in a top plan; and
the third inclination edge portion (4C) and the fourth inclination edge portion (4D) are coupled to each other at a central position of the reinforcing member in the longitudinal direction of the base as viewed in a top plan.

8. The RFID tag according to claim 7, wherein the portion at which the first inclination edge portion (4A) and the second inclination edge portion (4B) are coupled to each other has a curved shape; and
the portion at which the third inclination edge portion (4C) and the fourth inclination edge portion (4D) are coupled to each other has a curved shape.

9. The RFID tag according to any one of claims 1 to 8, wherein the first inclination edge portion (4A), second inclination edge portion (4B), third inclination edge portion (4C) and fourth inclination edge portion (4D) individually include at least one notch (7).

10. The RFID tag according to any one of claims 1 to 8, further comprising a second antenna (2X) provided on the base (1) and extending in the longitudinal direction of the base; wherein
the first inclination edge portion (4A) and the second inclination edge portion (4B) or the third inclination edge portion (4C) and the fourth inclination edge portion (4D) of the reinforcing member (4) overlap partially with the second antenna as viewed in a top plan.

11. The RFID tag according to claim 10, wherein, where the first inclination edge portion (4A) and the second inclination edge portion (4B) of the reinforcing member (4) partially overlap with the second antenna (2X), the first inclination edge portion and the second inclination edge portion individually include a first notch (7) at a portion overlapping with the second antenna; and wherein
where the third inclination edge portion (4C) and the fourth inclination edge portion (4D) of the reinforcing member partially overlap with the second antenna, the third inclination edge portion and the fourth inclination edge portion individually include a second notch at a portion overlapping with the second antenna.

12. The RFID tag according to any one of claims 1 to 11, wherein angles defined by a line along the transverse direction of the base (1) and the first inclination edge portion (4A), second inclination edge portion (4B), third inclination edge portion (4C) and fourth inclination edge portion (4D) are 75° or less.

13. The RFID tag according to any one of claims 1 to 12, further comprising a semiconductor chip (3) provided over the base (1) and electrically coupled to the first antenna (2); wherein
the semiconductor chip is covered with the reinforcing member (4).

14. The RFID tag according to any one of claims 1 to 13, wherein the base (1) has flexibility; and
the reinforcing member (4) is harder than the base.
